Europäisches Patentamt

(19) European Patent Office

Office européen des brevets

(11) Numéro de publication: **0 067 085**
**B1**

(12) **FASCICULE DE BREVET EUROPEEN**

(45) Date de publication du fascicule du brevet:
24.10.84

(21) Numéro de dépôt: 82400845.2

(22) Date de dépôt: 07.05.82

(51) Int. Cl.³: **C 10 J 3/50**

(54) **Procédé et installation d'alimentation en matière combustible d'une chambre de combustion.**

(30) Priorité: 08.05.81. FR 8109244

(43) Date de publication de la demande:
15.12.82 Bulletin 82/50

(45) Mention de la délivrance du brevet:
24.10.84 Bulletin 84/43

(84) Etats contractants désignés:
AT BE CH DE FR GB IT LI LU NL SE

(56) Documents cités:
DE - A - 2 256 409
DE - A - 2 602 463
FR - A - 2 390 495
GB - A - 2 029 355

(73) Titulaire: **CREUSOT-LOIRE, 42 rue d'Anjou,
F-75008 Paris (FR)**

(72) Inventeur: **Kissel, Roland, 12 rue Albert 1er, F-78110 Le
Vesinet (FR)**
Inventeur: **Berger, Pierre, 5 rue A. Merrheim,
F-42100 Saint-Etienne (FR)**
Inventeur: **Chrysostome, Gérard, 168 résidence du Lac
-Torcy, F-71210 Montchanin (FR)**

(74) Mandataire: **Le Brusque, Maurice et al,
CREUSOT-LOIRE 15 rue Pasquier, F-75383 Paris
Cedex 08 (FR)**

ACTORUM AG

## Description

L'invention a pour objet un procédé et une installation d'alimentation en matière combustible d'une chambre de combustion maintenue sous pression.

On connaît des réacteurs de gazéification constitués, schématiquement, d'une chambre de combustion à l'intérieur de laquelle est injecté un gaz comburant, généralement de l'oxygène, qui brûle un mélange combustible à base de charbon. Dans ce genre de procédé, pour différentes raisons, l'enceinte est souvent maintenue sous une pression importante, par exemple de l'ordre de 10 à 80 bar.

Le charbon doit être finement pulvérisé et, dans un procédé connu, pour le transporter et l'injecter dans le réacteur, on le met en suspension dans un liquide, généralement de l'eau. On obtient ainsi un mélange pompable, mais les pompes habituellement utilisées nécessitent normalement une teneur en liquide importante, supérieure à 40%, qui n'améliore pas le rendement thermique de la réaction. Il est vrai que celle-ci ne doit pas se dérouler à une température trop importante et que l'on est de toute façon obligé, pour contrôler cette température, d'utiliser de l'eau comme modérateur. Cependant, la teneur en eau nécessaire pour un bon fonctionnement de la réaction de gazéification ne dépasse pas 15%. On a donc intérêt à essayer de diminuer la teneur en eau du mélange combustible ainsi introduit à l'intérieur du réacteur.

Un autre problème vient de la pression régnant dans la chambre de combustion et de la nécessité d'y maintenir l'étanchéité au cours de l'introduction de la matière combustible. Ce résultat peut être obtenu lorsque l'on utilise une pompe permettant d'introduire le mélange dans l'enceinte à la pression voulue. Cependant, comme on vient de le dire, une pompe ne peut fonctionner qu'avec une teneur en eau assez importante.

Pour introduire un mélange plus sec, on peut aussi utiliser un système à piston, mais un tel système présente l'inconvénient de fonctionner de manière discontinue.

On a également proposé d'utiliser un transporteur à vis qui permet de réaliser par extrusion, à l'entrée dans la chambre de combustion, un bouchon de matière comprimée suffisamment étanche à la pression de la chambre et qui se renouvelle en continu au fur et à mesure de son introduction. Dans les installations connues, ce dispositif comporte une vis entraînée en rotation à l'intérieur d'un fourreau muni d'une entrée du mélange à une extrémité amont et, à une extrémité aval, d'une sortie débouchant dans l'enceinte sous pression. Le mélange introduit à l'entrée du fourreau est entraîné par la rotaton de la vis vers son extrémité aval munie d'un convergent suivi d'une filière qui freine la matière pour obliger celle-ci à se comprimer de façon à former, dans la filière, un bouchon compact introduit dans la chambre de combustion constituant le réacteur de gazéification et renouvelé en continu par la matière venant de l'amont.

Un tel dispositif permet d'introduire dans l'enceinte du réacteur, tout en maintenant l'étanchéité, un mélange ayant une teneur en eau inférieure à celle nécessitée pour un pompage par des moyens classiques. Cependant, en pratique, cette teneur en eau doit être supérieure à 20% et de préférence de l'ordre de 40% pour une matière en poudre.

D'autre part, dans les procédés d'alimentation utilisés jusqu'à présent, le mélange combustible que l'on reçoit à l'entrée du réacteur a généralement une teneur en eau assez importante.

En effet, pour conduire le combustible depuis le lieu de production ou le port de déchargement jusqu'au lieu d'utilisation, situé parfois à une distance importante, il est intéressant d'utiliser un «carboduc» dans lequel le charbon préalablement pulvérisé est véhiculé en suspension dans de l'eau. La teneur en eau est alors très importante, de l'ordre de 90%.

On peut aussi recevoir le charbon séparément et lui faire subir un broyage à sec. Cependant, si l'on veut éviter une trop grande production de poussière, le broyage à sec ne peut être très poussé et doit être suivi d'un broyage humide.

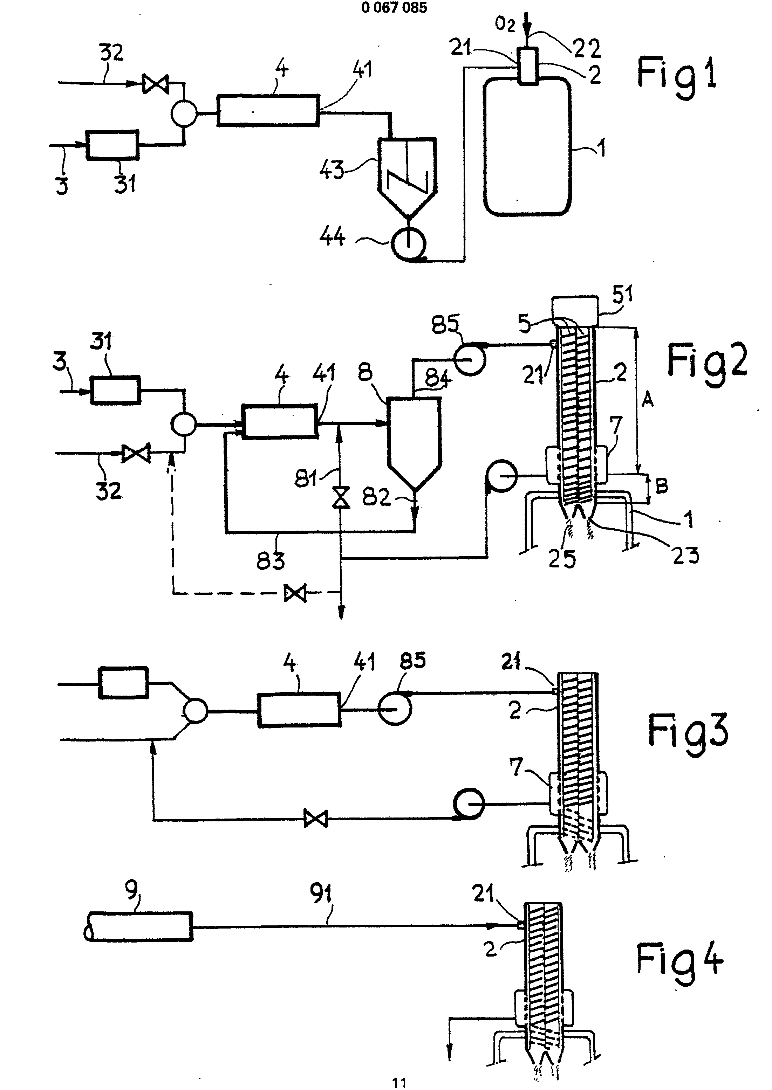

A titre d'exemple, on a représenté sur la fig. 1 jointe une installation d'alimentation classique.

Sur cette figure, on a représenté schématiquement le réacteur de gazéification constitué de l'enceinte sous pression 1, à la partie supérieure de laquelle est placé un brûleur 2 dans lequel on introduit en 21 le mélange combustible, l'oxygène étant injecté en 22.

Le mélange combustible constitué de charbon solide arrivant en 3 est mélangé, après un éventuel broyage à sec en 31, avec de l'eau arrivant en 32. Le mélange est introduit dans un broyeur humide 4 dans lequel le broyage doit être assez poussé pour que la matière sortant en 41 ne contienne pas de particules supérieures à la limite admise pour la gazéification; en pratique, cette limite est de l'ordre de 0,5 mm.

Pour être introduit dans le brûleur 2, le mélange humide sortant en 41 du broyeur passe d'abord dans un dispositif d'homogénéisation 43 à partir duquel il est injecté en 41 par une pompe 44.

Même lorsque l'on utilise un dispositif d'introduction à vis, le schéma d'alimentation est analogue et, en particulier, on est obligé d'effectuer un broyage très poussé qui, bien entendu, augmente la consommation d'énergie de l'installation.

L'invention a pour objet un nouveau procédé et une installation perfectionnée d'alimentation en matière combustible, permettant, d'une part, de réduire la teneur en eau du mélange injecté dans le réacteur et, d'autre part, de simplifier le processus de broyage.

Dans le procédé selon l'invention, grâce à l'utilisation, pour l'entraînement et la compression de la matière, de l'effet d'engrènement d'au moins deux vis imbriquées à filets identiques entraînées en rotation dans le même sens, on réalise dans la zone de compression un essorage du mélange introduit par l'orifice d'entrée en réglant le débit d'alimentation en mélange et la vitesse de rotation des vis de telle sorte que, pour un débit donné de matière à la sortie du fourreau, le bouchon constitué dans la zone de freinage se trouve à une pression donnée et contienne une proportion déterminée de phase liquide, la quantité supplémentaire de phase liquide étant expulsée de la zone de freinage et remontant vers l'amont dans la zone d'entraînement où elle est évacuée par des orifices ménagés dans des parties filtrantes du fourreau.

Selon un premier perfectionnement, le broyage humide réalisé avant l'introduction du mélange dans le réacteur est réglé de telle sorte que l'on tolère la présence, dans le mélange sortant du broyeur, d'une certaine proportion de grosses particules de granulométrie supérieure à celle nécessitée pour le fonctionnement du réacteur; on ajoute une certaine quantité de liquide à ce mélange et on le fait passer dans un disposiitf de triage en phase liquide comportant, d'une part, une sortie des grosses particules qui sont recyclées à l'entrée du broyeur humide pour un nouveau broyage et, d'autre part, une sortie du mélange fin, et l'on introduit ce mélange, contenant une proportion de liquide supérieure à 40%, dans l'orifice d'entrée du dispositif d'introduction à plusieurs vis où l'on réalise un essorage de la matière jusqu'à formation d'un bouchon compact ayant la teneur en liquide que l'on s'est fixée, de préférence inférieure à 15%, et l'excès de liquide recueilli à la sortie des parties filtrantes du fourreau est recyclé et mélangé en partie à la matière sortant du broyeur humide pour donner à celle-ci la teneur en liquide nécessaire au fonctionneemnt du dispositif de triage.

Dans un autre mode de réalisation, dans lequel le broyage est réalisé également en tolérant la présence à la sortie du broyeur d'une certaine quantité de grosses particules, on réalise un broyage complémentaire à l'intérieur du dispositif d'introduction à plusieurs vis effectuant en même temps la formation du bouchon étanche et l'essorage de la matière.

Pour réaliser ce broyage complémentaire, les vis comprennent, dans la zone de compression, des filets ayant un pas inversé par rapport à celui de la zone d'entraînement vers l'aval, et ceux-ci sont munis d'ouvertures ménagées radialement sur la hauteur du filet et de largeur telle qu'elles retiennent les particules de dimensions trop importantes, jusqu'à ce que celles-ci aient atteint un taux de broyage suffisant, et permettent le passage vers l'aval des particules suffisamment broyées pour être introduites dans le réacteur.

Dans un autre mode de réalisation, le mélange, qui vient d'un carboduc, est introduit directement à la sortie du carboduc dans l'orifice d'entrée du dispositif d'introduction où l'on réalise l'essorage du mélange et la formation du bouchon à la teneur en eau choisie, et le dispositif d'introduction à vis réalise en même temps le broyge complémentaire de la matière combustible.

Sur les figures annexées, on a représenté à titre d'exemple et schématiquement plusieurs modes de réalisation d'installations pour la mise en œuvre du procédé selon l'invention et de ses variantes.

La fig. 1 représente, comme on l'a déjà indiqué, un schéma classique d'alimentation d'un réacteur de gazéification.

Les fig. 2, 3 et 4 représentent, respectivement, trois schémas d'installation d'alimentation selon l'invention.

La fig. 5 est une vue partielle en coupe axiale de l'extrémité aval du dispositif d'introduction.

La fig. 6 est une coupe transversale selon VI-VI de la fig. 5.

La fig. 7 est une vue en coupe axiale de l'extrémité aval d'un dispositif d'introduction selon un autre mode de réalisation de l'invention.

La fig. 8 est une vue en coupe transversale selon VIII-VII de la fig. 7.

Si l'on compare au schéma classique de la fig. 1 l'installation selon l'invention, représentée à la fig. 2, on constate que l'on retrouve dans celle-ci l'enceinte sous pression 1 du réacteur de gazéification dans laquelle on introduit un mélange combustible constitué de charbon introduit en 3 et d'eau introduite en 32, le mélange passant dans un broyeur humide 4.

Selon une caractéristique essentielle de l'invention, le dispositif 2 d'introduction du mélange comprend deux vis 5 parallèles à filets identiques imbriqués, entraînées en rotation dans le même sens par un dispositif d'entraînement 51.

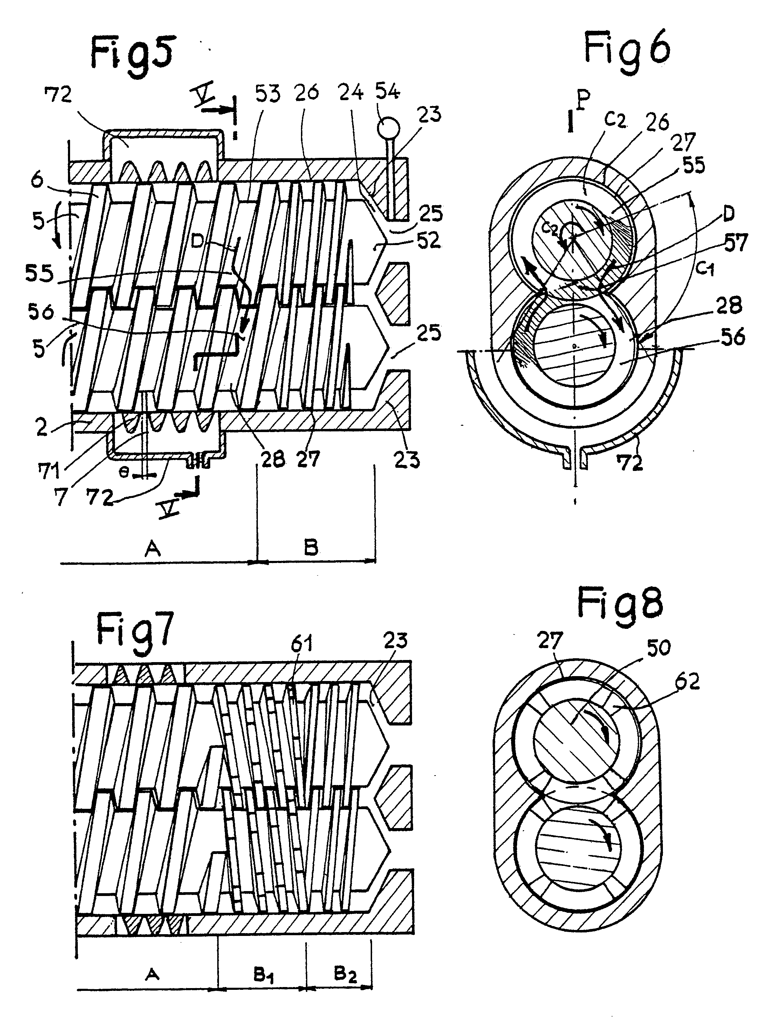

Le dispositif est représenté plus en détail sur les fig. 5 et 6, la fig. 5 étant une coupe de l'extrémité aval passant par les axes des deux vis 5.

Les vis sont entraînées en rotation dans le sens qui, selon le pas des filets 6, permet d'entraîner la matière introduite par un orifice d'entrée 21 jusqu'à l'extrémité aval. A cette extrémité aval, le fourreau 2 est muni, de préférence, d'un convergent 23 dans l'axe de chaque vis, chaque convergent 23 étant constitué d'une surface conique concave dans laquelle pénètre une pointe conique 52 de la vis, écartée de la surface 23 par un espace 24 de faible largeur laissant passer la matière jusqu'à un orifice de sortie 25.

Le passage de la matière entraînée par l'engrènement des vis dans les deux convergents 23 et dans les orifices 25 détermine un freinage de la matière qui est comprimée entre les filets 6, l'arbre 53 de la vis et la paroi interne 26 du fourreau.

On distingue ainsi le long des vis, de l'amont à l'aval, une zone d'entraînement A et une zone de compression B dans laquelle, éventuellement, les filets des vis peuvent avoir un pas plus resserré pour augmenter l'effet de compression.

L'utilisation, selon l'invention, d'une machine à au moins deux vis entraînées dans le même sens pour l'introduction de la matière présente des avantages importants dans cette application particulière à un réacteur de gazéification.

En effet, dans une extrudeuse à une vis, le bouchon étanche est réalisé dans un conduit qui suit la vis et qui forme une filière. En jouant sur le diamètre et la longueur de ce conduit, on règle d'une part le débit d'alimentation, en liaison avec la vitesse de rotation de la vis, et d'autre part l'intensité des frottements et, par conséquent, de l'effet de freinage qui permet d'obtenir le bouchon étanche. Toute la matière introduite dans la vis doit ressortir par l'extrémité aval et la phase liquide reste donc à l'intérieur du bouchon dont, d'ailleurs, elle augmente la compacité et l'étanchéité.

L'étanchéité ne peut être obtenue de façon certaine à la hauteur des vis car, si le taux de compression dans les filets augmentait trop, la phase liquide aurait tendance à s'échapper et à passer entre la périphérie des filets et la paroi interne du fourreau, en formant ainsi le long de celui-ci une pellicule qui tendrait à annuler le frottement entre la paroi interne du fourreau et la matière entraînée par les vis. Or, l'avancement de la matière vers l'aval est précisément dû au frottement qui empêche la matière de tourner avec la vis. Si une pellicule d'eau se forme entre la matière et le fourreau, la matière tourne alors avec la vis et n'avance plus vers l'aval.

Le processus d'avancement de la matière est totalement différent dans une machine à deux vis entraînées dans le même sens, comme on l'a représenté sur les fig. 5 et 6. En effet, dans ce cas, si la matière se déplace axialement, c'est surtout dans la zone d'entraînement où les filets ne sont pas complètement remplis. En effet, une certaine partie de la matière solide est entraînée par la rotation du filet et tourne autour de l'arbre jusqu'à la zone médiane 57 où les filets pénètrent l'un dans l'autre. La matière peut alors passer dans le filet suivant en suivant la flèche coudée D mais, du fait de la diminution de section due à l'engrènement des filets, elle se comprime à l'intérieur du filet 55, en amont de la zone 57 dans le sens de rotation de la vis, avant de passer dans le filet voisin 56 de l'autre vis. Le même processus se déroule de l'autre côté du plan P passant par les axes des vis.

Du fait que la matière est entraînée en se comprimant vers la zone C de part et d'autre du plan P, la zone 57 d'engrènement des vis est toujours remplie de matière.

Par ailleurs, au fur et à mesure de l'avancement vers l'aval, la matière se comprime et une plus grande proportion de particules est entraînée en rotation autour des vis à l'extérieur des filets. Le secteur angulaire C1 correspondant à la zone comprimée de chaque filet augmente, alors que diminue le secteur C2 correspondant à la zone restante du filet 55 dans laquelle la matière est moins comprimée.

En arrivant à l'extrémité aval, dans la zone de compression B, les filets sont complètement remplis de matière solide comprimée qui tourne autour des vis en passant de l'une à l'autre, en faisant un trajet hélicoïdal à deux changements de direction périodiques. Il en résulte une excellente homogénéisation du mélange qui exerce une pression égale sur toute la paroi interne du fourreau dans la zone comprimée B. L'étanchéité peut donc être assurée non seulement dans les convergents 23 et les filières 25, mais également, à l'intérieur des filets, dans la zone B où l'interstice 27 existant nécessairement entre la périphérie 60 du filet et la paroi interne 26 du fourreau est rempli de matière comprimée.

D'autre part, à l'intérieur de chacun des filets, avant que ceux-ci ne soient complètement remplis de matière solide, la compression du mélange dans le secteur C1 du filet provoque l'expulsion d'au moins une partie de la phase liquide vers la zone détendue correspondant au secteur C2 du même filet. Pour chacune des vis, les secteurs angulaire C2, même si leur ouverture diminue en allant vers l'aval, sont placés du même côté du plan P et communiquent donc par les interstices 27 entre la périphérie de la vis et le fourreau.

Si on laisse s'échapper à l'extérieur du fourreau au moins une partie de la phase liquide expulsée, il pourra donc s'établir le long du fourreau, dans les interstices 27, un courant de phase liquide remontant vers l'amont jusqu'à la zone où elle peut s'échapper. Ainsi, les interstices 27 joueront un rôle de filtration en laissant passer l'eau vers l'amont et en retenant les particules solides entraînées vers l'aval.

Dans ce but, la paroi 2 du fourreau est munie, en amont de la zone de compression B et par conséquent à la fin de la zone d'entraînement A, de parties filtrantes munies d'orifices laissant passer l'eau et retenant les particules solides.

Ces parties filtrantes 7 pourront être constituées, sur certains secteurs des parois du fourreau 2, de barrettes courbes 71 à section en V, parallèles entre elles et disposées transversalement aux axes des vis 5, et dont les bords sont écartés légèrement d'une distance telle que les particules solides soient retenues à l'intérieur du fourreau, alors que la phase liquide peut s'échapper vers une enceinte 72 où se rassemble la phase liquide filtrée qui peut être évacuée soit par gravité, soit au moyen d'une pompe d'aspiration.

Grâce à cette disposition, on réalise, à l'intérieur du dispositif d'introduction, un essorage de la matière en même temps que la formation du bouchon étanche à l'extrémité aval. En outre, ce bouchon est réalisé non seulement dans l'orifice de sortie 25, mais également à l'intérieur des filets de la zone de compression B.

Mais un autre avantage de l'utilisation d'un dispositif d'introduction à deux vis entraînées dans le même sens réside dans le fait qu'un tel dispositif permet d'alimenter le réacteur en un mélange dont la teneur en eau peut être contrôlée et maintenue en permanence à une valeur fixée à l'avance.

En effet, on a observé qu'il existe une relation entre la teneur en eau du mélange et la pression qui est obtenue dans le convergent 23 et dans l'orifice de sortie 25 de chaque vis. Par conséquent, selon le débit de matière que l'on veut obtenir à la sortie 25 du dispositif, on peut régler en fonction l'un de l'autre le débit d'alimentation en mélange à l'orifice d'entrée 21 et la vitesse de rotation des vis de façon à maintenir à une valeur constante la pression à l'intérieur du convergent, ce qui permet de maintenir sensiblement constante la teneur en eau du bouchon qui s'échappe par les orifices 25. A cet effet, on mesure par un manomètre 54 la pression dans l'orifice 25 ou dans le convergent 24, et on règle en conséquence le débit d'alimentation à l'orifice d'entrée 21 et la vitesse de rotation des vis, soit manuellement, soit par un système de régulation, de façon à maintenir constante la pression mesurée.

Des essais préalables permettent de déterminer, en fonction du débit de sortie, la relation entre la pression mesurée et la teneur en eau du bouchon.

Bien entendu, la teneur en eau peut également être réglée en jouant sur le débit aspiré dans la chambre 7.

Ainsi, l'utilisation d'un dispositif d'introduction à plusieurs vis muni de zones filtrantes donne un moyen de régler la teneur en eau de la matière introduite dans le réacteur à un niveau choisi, quelle que soit la proportion de liquide existant dans le mélange reçu à l'orifice d'entrée 21 du dispositif.

Il résulte de cette caractéristique importante la possibilité de modifier de façon avantageuse le schéma général d'alimentation du réacteur 1.

Dans le mode de réalisation de la fig. 2, le schéma habituel est peu modifié à l'arrivée des matières, puisque l'on reçoit séparément de l'eau et du charbon qui sont mélangés et introduits dans un broyeur humide 4 permettant de diminuer la granulométrie du charbon jusqu'à obtenir des particules de finesse suffisante pour être introduites dans le réacteur de gazéification.

Cependant, dans le procédé classique, étant donné que l'on souhaite généralement limiter la teneur en eau du mélange, on ne dispose pas de moyens simples pour effectuer un triage des grosses particules, celui-ci ne s'effectuant facilement que sur une suspension très diluée. C'est pourquoi on est obligé de pousser le broyage et, par conséquent, d'augmenter l'importance du broyeur et l'énergie consommée de façon à être sûr qu'à la sortie 41 du broyeur il n'existe plus aucune particule supérieure à la dimension voulue, c'est-à-dire généralement 0,5 mm.

Grâce à l'invention, au contraire, il est possible de réaliser un broyage plus grossier et de tolérer à la sortie 41 du broyeur la présence dans le mélange d'une certaine quantité de particules supérieures à la limite choisie; ainsi, par exemple, on peut tolérer des particules supérieures à 2 ou même 5 mm.

Le mélange sortant du broyeur est alors conduit dans un dispositif de triage par eau 8, par exemple du type hydrocyclone.

Ce dispositif ne fonctionne bien qu'avec une teneur en eau importante, et en tout cas supérieure à 60%. C'est pourquoi, si le mélange broyé sortant en 41 du broyeur 4 n'est pas suffisamment dilué, de l'eau est introduite dans le mélange avant l'entrée dans l'hydrocyclone 8, qui comporte donc une sortie 82 des gros éléments qui sont recyclés en 83 à l'entrée du broyeur 4 pour subir un nouveau broyage et une sortie 84 par laquelle on évacue un mélange très humide mais contenant uniquement des particules ayant la granulométrie souhaitée; ce mélange très humide est facilement pompé par une pompe 85 d'alimentation du dispositif d'introduction 2. Celui-ci effectue, comme on l'a décrit précédemment, un essorage du mélange humide de telle sorte que la matière introduite dans l'enceinte 1 par les orifices 25 contienne la proportion d'eau souhaitée, éventuellement inférieure à 15%. L'eau excédentaire se rassemble dans les enceintes de filtration 7 d'où elle est pompée et recyclée par le circuit 81, en partie en 86, avant l'entrée dans l'hydrocyclone 8, et en partie en 87 avant l'entrée dans le broyeur 4. Les débits d'eau dans les circuits 32, 86 et 87 sont réglés en fonction des besoins, et une purge 88 est également prévue sur le circuit 81.

Le schéma d'installation qui vient d'être décrit permet donc de tolérer un broyage plus grossier et, par conséquent, d'utiliser un broyeur plus simple consommant moins d'énergie. Mais le dispositif à deux vis utilisé, selon l'invention, pour l'introduction de la matière peut également, en cas de besoin, effectuer un certain broyage des particules solides.

En effet, le trajet précédemment décrit des particules solides à l'intérieur de chaque filet, avec alternance de phases de compression et de détente avec changement de direction au passage d'une vis à l'autre, provoque un excellent malaxage des particules, notamment dans chaque zone d'engrènement C. Ce malaxage, auquel s'ajoute l'effet de la compression, pourrait déjà produire un certain broyage de la matière, mais on peut en outre en augmenter l'intensité grâce aux dispositions représentées sur les fig. 7 et 8. Il est possible, en effet, après la zone d'entraînement A, de placer sur les vis une zone B1 dans laquelle les filets ont un pas inversé par rapport à celui des filets de la zone A provoquant l'entraînement vers l'aval. Ces filets, qui tournent évidemment dans le même sens, ont tendance à provoquer le retour en arrière de la matière et ont, par conséquent, un effet de freinage qui augmente la compression de la matière à la fin de la zone d'entraînement A.

Pour permettre le passage vers l'aval de la matière avec un débit contrôlé, les filets 61 de la zone B1 sont munis d'ouvertures ou fenêtres 62 pratiquées radialement sur la hauteur du filet, entre l'arbre 50 de la vis et la périphérie 60 du filet 61. Ces fenêtres sont régulièrement réparties autour de l'arbre et, de préférence, sont décalées angulairement d'un filet à l'autre de façon à faciliter l'établissement d'un courant de matière autorisée à passer vers l'aval.

On peut donner aux fenêtres 62 une largeur permettant de contrôler la dimension des particules autorisées à passer vers l'aval, les particules les plus grosses restant en amont dans la zone fortement comprimée où elles subissent un broyage, notamment au passage de la zone d'engrènement C.

Ainsi, on réalise dans la zone à pas inversé D1 un effet de triage de la matière combustible qui subit dans cette zone et en amont de celle-ci un broyage complémentaire jusqu'au degré souhaité.

En aval de la zone D1, les vis peuvent être munies à nouveau de zones D2 à pas direct provoquant l'avancement de la matière jusqu'aux convergents 23.

Cependant, on a déjà obtenu dans la zone D1 et à la fin de la zone A un très fort taux de compression de la matière réalisant un bouchon étanche. Par conséquent, il est possible également de supprimer la zone D2 et les convergents 23 en laissant la matière pénétrer directement dans l'enceinte 1 du réacteur. L'utilisation du convergent 23 facilite toutefois la mesure de la pression par un manomètre 54 pour contrôler le maintien de celle-ci à une valeur suffisante supérieure à la pression régnant dans le réacteur et, d'autre part, comme on l'a indiqué précédemment, pour contrôler la teneur en eau du mélange introduit dans le réacteur.

Cette possibilité de réaliser un broyage complémentaire des particules solides à l'intérieur même du dispositif d'introduction, et en même temps que la formation du bouchon étanche, permet de simplifier encore le schéma de l'installation.

La fig. 3 représente, à titre d'exemple, une installation simplifiée de la sorte.

Comme dans le cas précédent, décrit en se référant à la fig. 2, on réalise un broyage peu poussé dans un broyeur 4 à la sortie duquel on tolère une certaine proportion de particules de dimensions relativement importantes, par exemple supérieures à 2 mm. Le mélange sortant en 41 du broyeur 4 est pompé pour être introduit à l'orifice d'entrée 21 du dispositif d'introduction 2 dans lequel, comme on vient de l'indiquer, on réalise non seulement l'essorage de la matière jusqu'à la teneur en eau souhaitée, en même temps que la formation du bouchon étanche, mais également un broyage complémentaire des particules solides jusqu'à un degré de finesse contrôlé par les fenêtres 62.

L'eau excédentaire évacuée par la chambre de filtration 7 peut servir à la formation de la suspension introduite dans le broyeur 4, dans le cas où celui-ci est alimenté séparément par de l'eau et par une matière combustible sèche.

Cependant, dans de nombreux cas, le mélange combustible arrive sous forme de suspension extrêmement diluée, par exemple jusqu'à un taux d'humidité de 90%, dans un carboduc. L'invention permet alors l'utilisation d'un schéma extrêmement simplifié qui a été représenté sur la fig. 4.

Dans ce cas, le carboduc 9 peut déboucher directement dans un circuit 91 d'alimentation du dispositif d'introduction 2. Celui-ci reçoit donc un mélange très dilué, par exemple à 90%, mais réalise un essorage jusqu'à la teneur en eau souhaitée, l'eau excédentaire étant évacuée par la chambre de filtration 7. En outre, le charbon véhiculé dans le carboduc est généralement finement pulvérisé, la granulométrie pouvant être comprise entre 0 et 2 mm. Comme indiqué précédemment, il est possible de réaliser directement dans le dispositif d'introduction 2 un broyage complémentaire du charbon jusqu'à la teneur en eau souhaitée.

Selon une autre caractéristique de l'invention, l'essorage réalisé au cours de l'introduction de la matière dans l'enceinte sous pression donne également l'avantage très important de permettre l'utilisation dans le réacteur de gazéification de combustibles solides de toute nature, tels que charbons, lignite, tourbe, ou bien ceux issus de la biomasse, etc.

En effet, comme on l'a indiqué, pour obtenir un rendement intéressant du réacteur de gazéification, il est préférable que la matière combustible introduite dans celui-ci ait une teneur en eau assez limitée et de préférence inférieure à 15%. Or, pour la détermination de cette teneur en eau, on ne doit tenir compte que de la partie combustible de la matière solide introduite. Par conséquent, si la matière solide contient une certaine proportion de cendres incombustibles ou d'eau liée chimiquement à la partie combustible, comme dans le cas des lignites ou de la biomasse, le rapport de la proportion de matière combustible utile à la proportion d'eau est encore diminué.

Grâce à l'invention, en diminuant par essorage la proportion de phase liquide contenue dans la matière introduite dans le réacteur, on peut régler celle-ci en fonction de la quantité utile de matière combustible et, par conséquent, obtenir la teneur en eau adéquate en tenant compte de la quantité de cendres et de la quantité d'eau chimiquement liée.

En particulier, dans le cas où la matière combustible que l'on veut gazéifier est un lignite, on pourra tenir compte de la teneur en eau chimique des lignites de façon à ne laisser dans la matière introduite dans le réacteur qu'une quantité minimale de phase liquide permettant d'obtenir globalement la teneur optimale d'eau juste nécessaire pour que celle-ci joue son rôle de modérateur de la réaction.

Bien entendu, l'invention ne se limite pas aux détails des variantes de réalisation qui n'ont été indiquées qu'à titre d'exemple, d'autres variantes pouvant être imaginées en utilisant le même principe d'alimentation.

**Revendications**

1. Procédé d'alimentation en matière combustible d'une chambre (1) de combustion-gazéification maintenue sous pression, à l'intérieur de laquelle un mélange de matière combustible finement pulvérisée en suspension dans une phase liquide est introduit, en présence d'un gaz comburant tel que de l'oxygène, au moyen d'un transporteur à vis limité par un fourreau allongé (2) muni à une extrémité amont d'une entrée (21) de la matière et, à une extrémité aval, d'une sortie (22) débouchant dans la chambre (1), le mélange introduit à l'entrée (21) passant successivement dans une zone (A) d'entraînement vers l'aval, puis dans une zone (B) de compression de la matière entraînée pour la formation d'un bouchon étanche introduit par la sortie (22) dans la chambre (1) et renouvelé en continu par la matière venant de l'amont, caractérisé par le fait que, grâce à l'utilisation, pour l'entraînement et la compression de la matière, de l'effet d'engrènement d'au moins deux vis (5) imbriquées à filets identiques entraînées en rotation dans le même sens à l'intérieur du fourreau (2) qui les enveloppe, on réalise dans la zone de compression (B) un essorage du mélange introduit par l'entrée (21) en réglant le débit d'alimentation en mélange et la vitesse de rotation des vis (5) de telle sorte que, pour un débit donné de matière à la sortie (22) du fourreau (2), le bouchon constitué dans la zone de compression (B) se trouve à une pression donnée et contienne une proportion déterminée de phase liquide, la quantité supplémentaire de phase liquide étant expulsée de la zone de compression (B) et remontant vers l'amont dans la zone d'entraînement (A) d'où elle est évacuée par des orifices ménagés dans des parties filtrantes (7) du fourreau (2).

2. Procédé d'alimentation selon la revendication 1, dans lequel le mélange de liquide et de matière combustible passe, avant son introduction dans le réacteur (1), dans un broyeur humide (4), caractérisé par le fait que l'on tolère la présence dans le mélange sortant du broyeur (4) d'une certaine proportion de grosses particules de granulométrie supérieure à x mm, que l'on ajoute une certaine quantité de liquide à ce mélange et qu'on le fait passer dans un dispositif de triage en phase liquide (8) comportant une sortie des grosses qui sont recyclées à l'entrée du broyeur humide et une sortie de mélange fin ayant une proportion de liquide supérieure à 60%, que le mélange est introduit dans l'orifice d'entrée du dispositif d'introduction (2) à plusieurs vis qui réalise un essorage du mélange jusqu'à formation d'un bouchon de matière comprimée ayant une teneur en liquide inférieure à y%, de préférence inférieure à 15%, et que l'excès de liquide recueilli à la sortie des parties filtrantes (7) est recyclé à la sortie du broyeur humide (4) pour l'élévation de la teneur en liquide du mélange broyé, avant son introduction dans le dispositif de triage (8).

3. Procédé d'alimentation selon la revendication 1, dans lequel le mélange de liquide et de matière combustible passe, avant son introduction dans le réacteur, dans un broyeur humide (4), caractérisé par le fait que l'on tolère la présence dans le mélange sortant du broyeur (4) d'une certaine quantité de grosses particules de granulométrie supérieure à x mm, et que l'on réalise un broyage complémentaire à l'intérieur du dispositif (2) d'introduction à plusieurs vis en même temps que la formation du bouchon étanche et l'essorage de la matière.

4. Procédé d'alimentation selon la revendication 3, caractérisé par le fait que, pour réaliser le broyage complémentaire de la matière combustible, les vis (5) du dispositif d'introduction comprennent dans la zone de compression (B1) des filets (61) à pas inversés par rapport au pas de la zone d'entraînement vers l'aval, lesdits filets (61) étant munis de fenêtres (62) ménagées radialement sur la hauteur du filet et de largeur telle qu'elles retiennent les particules de dimensions trop importantes jusqu'à ce que celles-ci aient atteint un taux de broyage suffisant, et permettent le passage vers l'aval des particules suffisamment broyées.

5. Procédé d'alimentation selon la revendication 1, dans lequel le mélange en suspension est alimenté par un carboduc (9), caractérisé par le fait que le mélange est introduit directement, à la sortie du carboduc (9), dans l'orifice d'entrée (21) du dispositif (2) d'introduction où l'on réalise l'essorage du mélange et la formation d'un bouchon à teneur en eau inférieure à la limite choisie pour le bon fonctionnement du réacteur, et que l'on effectue en même temps dans le dispositif d'introduction un broyage complémentaire de la matière combustible.

6. Installation d'alimentation en matière combustible pour la mise en œuvre du procédé selon la revendication 1, caractérisée par le fait que le dispositif (2) d'introduction comprend au moins deux vis (5) parallèles à filets identiques imbriqués, placées dans un fourreau (2) qui les enveloppe, et des moyens (51) d'entraînement des vis (5) en rotation dans le même sens, et à l'intérieur duquel la matière entraînée par les vis passe successivement dans une zone d'entraînement (A), puis dans une zone de compression (B) pour la réalisation d'un bouchon étanche, et que le fourreau (2) est muni, en amont de la zone de compression (B), de parties filtrantes (7) constituées de secteurs de paroi dans lesquels sont ménagés des orifices de filtration de dimensions susceptibles de laisser passer vers l'extérieur la phase liquide en retenant à l'intérieur les particules solides.

7. Installation d'alimentation en matière combustible d'une chambre de combustion (1) au moyen d'un dispositif d'introduction selon la revendication 6, comportant un broyeur humide (4) d'un mélange de la matière combustible et d'une phase liquide, caractérisée par le fait qu'elle comporte un dispositif (8) de triage en phase liquide du mélange sortant du broyeur humide (4), muni d'une sortie du mélange fin reliée à l'entrée du dispositif d'introduction (2) et d'une sortie des grosses reliée à un circuit de recyclage vers le broyeur (4), les parties filtrantes du fourreau (2) du dispositif d'introduction débouchant dans une enceinte (7) de récupération de la phase liquide essorée, reliée à la sortie du broyeur humide par un circuit de recyclage de la phase liquide essorée dans le mélange combustible avant son entrée dans le dispositif de triage (8).

8. Installation d'alimentation en matière combustible d'une chambre de combustion (1) au moyen d'un dispositif d'introduction selon la revendication 6, caractérisée par le fait que les vis (5) sont munies, dans la zone de compression (B), de filets (61) à pas inversés réalisant un broyage complémentaire de la matière solide et munies d'ouvertures (62) laissant passer vers l'aval les grosses de matière suffisamment broyées.

**Patentansprüche**

1. Verfahren zur Versorgung einer unter Druck gehaltenen Verbrennungs-Vergasungs-Kammer (1) mit Brennstoff, in deren Inneres eine fein pulverisierte Brennstoffmischung, welche in einer flüssigen Phase suspendiert ist, eingeführt wird in Gegenwart eines Verbrennungsgases, wie z.B. Sauerstoff, mittels eines Schraubenförderers, der durch eine längliche Hülse (2) begrenzt ist und an einem stromaufwärts gelegenen Ende mit einer Stoffeintrittsöffnung (21) und an einem stromabwärts gelegenen Ende mit einer Austrittsöffnung (22) versehen ist, die in die Kammer (1) mündet, wobei die bei der Eintrittsöffnung (21) eingeführte Mischung nacheinander eine Förder- bzw. Antriebszone A in Stromabwärtsrichtung und danach eine Zone B zur Kompression des beförderten Stoffes zur Bildung eines dichten Pfropfens durchläuft, der durch die Austrittsöffnung (22) in die Kammer (1) eingeführt wird und ständig durch den von stromaufwärts kommenden Stoff erneuert wird, dadurch gekennzeichnet, dass man aufgrund der Verwendung der Eingriffswirkung von mindestens zwei Schrauben bzw. Schnecken (5) zur Beförderung und zur Kompression des Stoffes, die mit identischen Gewinden überlappend angeordnet und in der sie umhüllenden Hülse (2) in gleichsinnige Rotation versetzt sind, in der Kompressionszone B ein Trocknen der durch die Öffnung (21) eingeführten Mischung erzielt, indem man das Ausmass der Mischungszufuhr und die Rotationsgeschwindigkeit der Schrauben (5) so regelt, dass für eine gegebene Stoffmenge am Ausgang (22) der Hülse (2) der in der Kompressionszone B ausgebildete Pfropfen unter einem vorgegebenen Druck steht und einen bestimmten Anteil flüssiger Phase enthält, wobei die überschüssige Menge der flüssigen Phase aus der Kompressionszone B gedrückt wird und stromaufwärts in die Antriebszone A aufsteigt, aus der sie durch in Filterteilen (7) der Hülse (2) ausgebildete Öffnungen abgeführt wird.

2. Verfahren zur Versorung gemäss Anspruch 1, bei welchem die aus Flüssigkeit und Brennstoff bestehende Mischung vor ihrer Einführung in den Reaktor (1) in eine Feuchtzerkleinerungseinrichtung (4) gelangt, dadurch gekennzeichnet, dass man in der aus der Zerkleinerungseinrichtung (4) kommenden Mischung das Vorhandensein eines gewissen Anteiles grober Teilchen mit einer Korngrösse, die x mm übersteigt, zulässt, dass man eine bestimmte Menge Flüssigkeit dieser Mischung beigibt und dass man sie in flüssiger Phase eine Sortiervorrichtung durchlaufen lässt, die einen Austritt für die groben Teilchen, die zum Eingang der Feuchtzerkleinerungseinrichtung rezykliert werden, sowie einen Austritt für die feine Mischung besitzt, welche einen Flüssigkeitsanteil von über 60% aufweist, dass die Mischung in eine Eintrittsöffnung der Einführungseinrichtung (2), welche eine Mehrzahl von Schrauben bzw. Schnecken aufweist, eingeführt wird, welche ein Trocknen der Mischung bis zur Bildung eines aus komprimiertem Stoff bestehenden Pfropfens erzielt, welcher einen Flüssigkeitsgehalt von weniger als y%, vorzugsweise weniger als 15%, hat, und dass der Überschuss an Flüssigkeit, der am Anfang der Filterteile (7) erhalten wird, zum Ausgang der Feuchtzerkleinerungseinrichtung (4) rezykliert wird, um den Flüssigkeitsgehalt in der zerkleinerten Mischung zu erhöhen, bevor diese in die Sortiervorrichtung (8) geleitet wird.

3. Verfahren zur Versorgung nach Anspruch 1, bei dem die aus Flüssigkeit und Brennstoff bestehende Mischung vor ihrer Einführung in den Reaktor in eine Feuchtzerkleinerungseinrichtung (4) gelangt, dadurch gekennzeichnet, dass man in der aus der Zerkleinerungseinrichtung (4) kommenden Mischung eine bestimmte Menge von groben Teilchen mit einer Korngrösse, die x mm übersteigt, zulässt und dass man einen zusätzlichen Zerkleinerungsvorgang im Inneren der Einführungsvorrichtung (2) mit einer Mehrzahl von Schrauben bzw. Schnecken vorsieht, zur gleichen Zeit wie die Bildung des dichten Pfropfens und die Trocknung des Stoffes.

4. Verfahren zur Versorgung gemäss Anspruch 3, dadurch gekennzeichnet, dass um die zusätzliche Zerkleinerung des Brennstoffes zu erzielen, die Schrauben bzw. Schnecken (5) der Einführungseinrichtung in der Kompressionszone B1, Gewinde (61) umfassen, die inbezug auf die Steigung der Antriebszone in Stromabwärtsrichtung eine inverse Steigung aufweisen, wobei die Gewinde (61) mit Ausnehmungen bzw. Fenstern (62) versehen sind, die radial auf der Höhe des Gewindes angeordnet sind und so breit sind, dass sie die Teilchen mit zu grossen Abmessungen zurückhalten, bis diese einen ausreichenden Zerkleinerungsgrad erreicht haben, und den Durchgang in Stromabwärtsrichtung von hinreichend zerkleinerten Teilchen gestatten.

5. Verfahren zur Versorgung nach Anspruch 1, bei dem die suspendierte Mischung von einer Brennstoffzuleitung (9) zugeführt wird, dadurch gekennzeichnet, dass die Mischung direkt vom Ausgang der Brennstoffzuleitung (9) in die Einlassöffnung (21) der Einführungseinrichtung (2) eingebracht wird, wo das Trocknen der Mischung und die Bildung des Pfropfens mit einem Wassergehalt erzielt wird, der unter der für das gute Funktionieren des Reaktors gewählten Grenze liegt, und dass man gleichzeitig in der Einführungseinrichtung einen zusätzlichen Zerkleinerungsvorgang für den Brennstoff vorsieht.

6. Anlage zur Versorgung mit Brennstoff zur Durchführung des Verfahrens nach Anspruch 1, dadurch gekennzeichnet, dass die Einführungseinrichtung (2) mindestens zwei parallel angeordnete Schrauben bzw. Schnecken (5) mit identischen, sich überlappenden Gewinden, die in einer sie umschliessenden Hülse (2) angeordnet sind, sowie Antriebseinrichtungen (51) umfasst, um die Schrauben bzw. Schnecken (5) in gleichsinnige Rotation zu versetzen, wobei im Inneren der Hülse der von den Schrauben beförderte Stoff nacheinander eine Förder- bzw. Antriebszone A und danach eine Kompressionszone B zur Bildung eines dichten Pfropfens durchläuft, und dass die Hülse (2) stromaufwärts der Kompressionszone B mit Filterteilen (7) versehen ist, die von Wandsektoren gebildet sind, in denen Filteröffnungen solcher Abmessungen angeordnet sind, dass sie die flüssige Phase nach aussen dringen lassen und die festen Teilchen im Inneren zurückhalten.

7. Anlage zur Versorgung einer Verbrennungskammer (1) mit Brennstoff mittels einer Einführungseinrichtung nach Anspruch 6, die eine Feuchtzerkleinerungseinrichtung (4) für eine Mischung aus Brennstoff und einer flüssigen Phase umfasst, dadurch gekennzeichnet, dass sie eine Sortiervorrichtung (8) für die flüssige Phase der Mischung umfasst, die aus der Feuchtzerkleinerungseinrichtung kommt, welche mit einer Austrittsöffnung für die feine Mischung versehen ist, welche mit dem Einlass der Einführungseinrichtung (2) und welche mit einem Auslass für grobe Teilchen versehen ist, welcher mit einem Rückführungskreis zur Zerkleinerungseinrichtung (4) verbunden ist, wobei die Filterteile der Hülse (2) der Einführungseinrichtung in eine Ummantelung (7) zur Wiedergewinnung der entzogenen flüssigen Phase münden, welche mit dem Auslass der Feuchtzerkleinerungseinrichtung über einen Rückführungskreis für die flüssige Phase verbunden ist, die aus der brennbaren Mischung vor ihrem Eintritt in die Sortiervorrichtung (8) entzogen wurde.

8. Anlage zur Versorgung einer Verbrennungskammer (1) mit Brennstoff mittels einer Einführungseinrichtung nach Anspruch 6, dadurch gekennzeichnet, dass die Schrauben bzw. Schnecken (5) in der Kompressionszone B mit inversen Steigungen aufweisenden Gewinden (61), die eine zusätzliche Zerkleinerung des festen Stoffes bewirken, und mit Ausnehmungen bzw. Öffnungen (62) versehen sind, die die groben Teilchen des hinreichend gemalenen Stoffes in Stromabwärtsrichtung durchlassen.

## Claims

1. Process for feeding combustible material to a combustion-gasification chamber (1) maintained under pressure, inside which a mixture of finely powdered combustible material in suspension in a liquid phase is introduced, in the presence of a combustive gas such as oxygen, by means of a screw conveyor bounded by an elongated sleeve (2) equipped at an upstream end with an entry (21) for the material and, at a downstream end, with an outlet (22) opening out into the chamber (1), the mixture introduced at the entry (21) passing successively through a zone (A) for entrainment downstream, then through a zone (B) for compressing the entrained material to form a firm plug entering the chamber (1) through the outlet (22) and continuously renewed by the material coming from upstream, characterised in that, by virtue of the use, for entraining and compressing the material, of the meshing action of at least two intermeshing screws (5) with identical flights driven in rotation in the same direction inside the sleeve (2) which surrounds them, drying of the mixture introduced through the entry (21) is produced in the compression zone (B) by regulating the rate of supply of mixture and the speed of rotation of the screws (5) so that, for a given flow of material at the outlet (22) of the sleeve (2), the plug formed in the compression zone (B) is at a given pressure and contains a specified proportion of liquid phase, the additional quantity of liquid phase being expelled from the compression zone (B) and rising again upstream in the entrainment zone (A) from which it is discharged by openings provided in the filtering parts (7) of the sleeve (2).

2. Feeding process according to Claim 1, in which the mixture of liquid and of combustible material passes before its entry into the reactor (1) through a wet grinder (4), characterised in that the presence of a certain proportion of large particles of paticle size greater than x mm in the mixture leaving the grinder (4) is tolerated, that a certain quantity of liquid is added to this mixture, and that it is passed through a device for liquid phase classification (8) comprising an outlet for coarse material, which is recycled to the entry of the wet grinder, and an outlet for fine mixture having a proportion of liquid greater than 60%, that the mixture is introduced into the inlet opening of the feeding device (2) with several screws which produces drying of the mixture until a plug of compressed material having a liquid content lower than y%, preferably lower than 15%, is formed, and that the excess of liquid collected at the outlet of the filtering parts (7) is recycled to the outlet of the wet grinder (4) to raise the content of liquid in the ground mixture before its entry into the classifying device (8).

3. Feeding process according to Claim 1, in which the mixture of liquid and of combustible material passes, before its entry into the reactor, through a wet grinder (4), characterised in that the presence of a certain quantity of coarse particles with particle size greater than x mm in the mixture leaving the grinder (4) is tolerated, and that an additional grinding is produced inside the feeding device (2) with several screws at the same time as the formation of the firm plug and the drying of the material.

4. Feeding process according to Claim 3, characterised in that, to produce the additional grinding of the combustible material, the screws (5) of the feeding device comprise, in the compression zone (B1), flights (61) with a pitch which is reversed relative to the pitch of the zone for entrainment downstream, the said flights (61) being equipped with windows (62) arranged radially over the height of the flight and of such width that they retain oversize particles until the latter have attained a sufficient degree of grinding, and permit the passage downstream of the particles which are sufficiently ground.

5. Feeding process according to Claim 1, in which the mixture in suspension is supplied by a coal pipeline (9), characterised in that the mixture is introduced directly, at the outlet of the coal pipeline (9), into the inlet opening (21) of the feeding device (2) where drying of the mixture is carried out together with the formation of a plug with a water content lower than the limit selected for successful operation of the reactor, and that at the same time additional grinding of the combustible material is carried out in the feeding device.

6. Plant for feeding combustible material for the use of the process according to Claim 1, characterised in that the feeding device (2) comprises at least two parallel screws (5) with identical intermeshing flights, placed in a sleeve (2) which surrounds them, and means (51) for driving the screws (5) in rotation in the same direction, and inside which the material entrained by the screws passes successively through an entrainment zone (A), then through a compression zone (B) to produce an impervious plug, and in that the sleeve (2) is provided, upstream of the compression zone (B), with filtering parts (7) consisting of wall sections in which are arranged filtering orifices with dimensions capable of allowing the liquid phase to pass outwards and retaining the solid particles within.

7. Plant for feeding combustible material to a combustion chamber (1) by means of a feeding device according to Claim 6, comprising a wet grinder (4) of a mixture of the combustible material and a liquid phase, characterised in that the plant comprises a device (8) for liquid phase classification of the mixture leaving the wet grinder (4), equipped with an outlet for the fine mixture connected to the entry of the feeding device (2) and an outlet for coarse material connected to a circuit for recycling towards the grinder (4), the filtering parts of the sleeve (2) of the feeding device opening out into an enclosure (7) for recovery of the expelled liquid phase, connected to the outlet of the wet grinder by a circuit for recycling the expelled liquid phase to the combustible mixture before its entry into the classifying device (8).

8. Plant for feeding combustible material to a combustion chamber (1) by means of a feeding device according to Claim 6, characterised in that the screws (5) are equipped, in the compression zone (B), with reverse pitch flights (61) producing additional grinding of the solid material and are equipped with openings (62) allowing to pass downstream coarse material which is sufficiently ground.

0 067 085

Fig1

Fig2

Fig3

Fig4

# Fig5

# Fig6

# Fig7

# Fig8